# EUROPEAN PATENT APPLICATION

(11) **EP 4 800 749 A1**
(43) Date of publication of application: **02.09.2026**
(21) Application number: 24884704.8
(22) Date of filing: 29.10.2024
(51) Int. Cl.: H01M 4/13, H01M 4/02, H01M 10/0525

(54) **ELECTRODE SHEET AND PREPARATION METHOD THEREFOR, AND BATTERY AND ELECTRIC SYSTEM**

(30) Priority: 31.10.2023 CN 202311438729
(71) Applicant: BYD Company Limited, Shenzhen, Guangdong 518118 (CN)
(72) Inventor: HU, Yiwei, Shenzhen, Guangdong 518118 (CN); GUO, Zizhu, Shenzhen, Guangdong 518118 (CN); TAN, Kai, Shenzhen, Guangdong 518118 (CN); HAN, Zhilong, Shenzhen, Guangdong 518118 (CN); LI, Huafeng, Shenzhen, Guangdong 518118 (CN)
(74) Representative: Taor, Simon Edward William
(86) International application number: PCT/CN2024/127980
(87) International publication number: WO 2025/092701

(57) **Abstract**

Provided are an electrode plate and a preparation method thereof, a battery, and an electrical system. The electrode plate includes a current collector and an active material layer that are stacked. The active material layer includes a plurality of active particles. The active material layer further has a first pore and a second pore. A pore diameter R1 of the first pore and a pore diameter R2 of a second pore satisfy 0.05*D50≤R1<0.65*D50 and 0.65*D50<R1<10*D50, where D50 is a median particle size of the plurality of active particles, and units of R1 and R2 are nm.

## Description

This application claims priority to Chinese Patent Application No. 202311438729.2, filed with the China National Intellectual Property Administration on October 31, 2023 and entitled "ELECTRODE PLATE AND PREPARATION METHOD THEREOF, BATTERY, AND ELECTRICAL SYSTEM", which is incorporated herein by reference in its entirety.

### TECHNICAL FIELD

This application relates to the field of lithium battery technologies, and in particular, to an electrode plate and a preparation method thereof, a battery, and an electrical system.

### BACKGROUND

In secondary batteries, electrolyte wettability has crucial impact on battery performance. If an electrolyte has poor wetting effect for positive and negative electrodes of a battery, it affects transmission of ions and conduction of electrons, thereby reducing ion mobility of the battery. An ion transmission rate inside the battery is greatly reduced when the electrolyte has poor wetting performance. This not only affects charge and discharge rates of the battery, but also causes the battery to generate greater internal resistance during charging and discharging, thus reducing energy efficiency of the battery. In addition, if the electrolyte has insufficient wetting performance, it may also lead to problems such as capacity fading and electrode material corrosion during charging and discharging of the battery. Due to these problems, a service life of the battery is further shortened. Therefore, how to improve the wetting performance of the electrolyte to enhance performance of the secondary battery becomes important.

### SUMMARY

The purpose of this application is to provide an electrode plate and a preparation method thereof, a battery, and an electrical system, to resolve problems of poor electrolyte wettability and low ion mobility.

To implement the purpose of this application, this application provides the following technical solutions.

According to a first aspect, this application provides an electrode plate. The electrode plate includes a current collector and an active material layer that are stacked. The active material layer includes a plurality of active particles. The active material layer further has a first pore and a second pore. A pore diameter R1 of the first pore and a pore diameter R2 of a second pore satisfy 0.05*D50≤R1<0.65*D50 and 0.65*D50≤R1≤10*D50, where D50 is a median particle size of the plurality of active particles, and units of R1 and R2 are nm.

In an implementation, the porosity A1 of the first pore satisfies 15%≤A1≤34.5%, and the porosity A2 of the second pore satisfies 0.3%≤A2≤10%.

In an implementation, a total porosity in the active material layer is σ, the total porosity σ includes the porosity A1 of the first pore and the porosity A2 of the second pore, and the total porosity σ satisfies 25%≤σ≤35% and A1+A2≤σ.

In an implementation, a ratio η of the porosity A2 of the second pore to the porosity A1 of the first pore is A2/A1 and satisfies 1%*(σ/A)≤η≤15%*(σ/A), where A is a correction coefficient of the total porosity σ in the active material layer, and A satisfies 25%≤A≤35%.

In an implementation, the ratio η of the porosity A2 of the second pore to the porosity A1 of the first pore is A2/A1 and satisfies 1%*(σ/30%)≤η≤15%*(σ/30%).

In an implementation, the ratio η of the porosity A2 of the second pore to the porosity A1 of the first pore is A2/A1 and satisfies 1%≤η≤15%.

In an implementation, the active material layer includes a first surface and a second surface opposite to each other, the first surface is connected to the current collector, and a proportion of the second pore in a direction from the first surface to the second surface presents a trend of decreasing before increasing.

In an implementation, the median particle size D50 of the active particles satisfies 100 nm≤D50≤30 µm.

According to a second aspect, this application provides a preparation method of an electrode plate, including: preparing a mixed powder material containing an active material; preparing an active material layer by using the mixed powder material, and disposing the active material layer on a current collector; the active material layer includes a plurality of active particles, and the active material layer further has a first pore and a second pore; and a pore diameter R1 of the first pore and a pore diameter R2 of the second pore satisfy 0.05*D50≤R1<0.65*D50 and 0.65*D50≤R1≤10*D50, where D50 is a median particle size of the of active particles.

In an implementation, preparing the mixed powder material containing the active material includes: premixing the active material, a binder, and a conductive agent in proportion to obtain premixed powder; and putting the premixed powder into a jet mill for grinding and mixing to obtain jet mill mixed powder.

In an implementation, a mass percentage of the binder ranges from 1.5% to 5%, a mass percentage of the conductive agent ranges from 0.3% to 2%, and a crushing air pressure range for grinding and mixing after putting the premixed powder into the jet mill ranges from 0.1 MPa to 0.8 MPa.

In an implementation, preparing the active material layer by using the mixed powder material, and disposing the active material layer on the current collector includes: rolling the jet mill mixed powder to form a first self-supporting membrane; rolling the first self-supporting membrane to form a second self-supporting membrane; and attaching the second self-supporting membrane to the current collector to obtain the electrode plate.

In an implementation, a rolling linear pressure range for forming the first self-supporting membrane is 0.1 t/cm to 1 t/cm, a differential speed ratio satisfies 1:1 to 1:3, and a temperature range is 100°C to 250°C; a rolling linear pressure range for forming the second self-supporting membrane is 0.1 t/cm to 1 t/cm, a differential speed ratio satisfies 1:1 to 1:3, and a temperature range is 60°C to 180°C; and a rolling linear pressure range for attaching the second self-supporting membrane to the current collector to obtain the electrode plate is 0.1 t/cm to 1 t/cm, and a differential speed ratio satisfies 1:1 to 1:3.

According to a third aspect, this application provides a battery, including a separator and the electrode plate in the foregoing implementations. The electrode plate includes a positive electrode plate and a negative electrode plate. The positive electrode plate and the negative electrode plate are disposed on two opposite sides of the separator. The electrode plate includes the electrode plate in any embodiment of the first aspect in this application, or the electrode plate prepared by using the preparation method of the electrode plate in any embodiment of the second aspect in this application.

According to a fourth aspect, this application provides an electrical system. The electrical system includes an electrical device and the battery in the foregoing implementations. The battery is configured to supply power to the electrical device.

In this application, the active material layer in the electrode plate has the first pore and the second pore, and the pore diameters of the first pore and the second pore satisfy a specific range. The larger second pore becomes a large high-speed channel with high-flux ion transfer, and the smaller first pore becomes a dense capillary channel. Through a pore distribution structure of large and small pores, the wettability of an electrolyte in the active material is improved, to optimize a transfer path of ions inside the electrode plate, thereby reducing overall internal resistance of a battery. This further improves power performance, fast-charging performance and low-temperature performance of the electrode plate while improving ion mobility.

### BRIEF DESCRIPTION OF DRAWINGS

To describe the technical solutions in embodiments of this application or in the conventional technologies more clearly, the following briefly describes the accompanying drawings required for describing the embodiments or the conventional technologies. Apparently, the accompanying drawings in the following description show merely some implementations of this application, and a person of ordinary skill in the art may still derive other drawings from these accompanying drawings without creative efforts.
FIG. 1 is a longitudinal cross-sectional view of an electrode plate according to an implementation;
FIG. 2 is a transverse cross-sectional view of an electrode plate according to an implementation;
FIG. 3 is a longitudinal cross-sectional view of an active material layer according to an implementation;
FIG. 4 is a flowchart of a preparation method of an electrode plate according to an implementation;
FIG. 5 is a diagram of pore diameter distribution of Example 1 and Comparative example 1;
FIG. 6 is a diagram of a structure of a battery according to an implementation; and
FIG. 7 is a diagram of a structure of an electrical system according to an implementation.

Reference numerals:
100: electrode plate; 10: active material layer; 11: first pore; 12: second pore; 13: active particle; 10A: first surface layer; 10B: second surface layer; 10C: intermediate layer; 101: first surface; 102: second surface; 20: current collector; 1000: battery; 200: separator; 300: electrolyte; 2000: electrical system; 3000: electrical device.

### DESCRIPTION OF EMBODIMENTS

The following clearly and completely describes the technical solutions in embodiments of this application with reference to the accompanying drawings in embodiments of this application. Apparently, the described embodiments are merely some rather than all of embodiments of this application. All other embodiments obtained by a person of ordinary skill in the art based on embodiments of this application without creative efforts shall fall within the protection scope of this application.

It should be noted that, when a component is referred to as "being fastened to" another component, the component may be directly on the another component, or there may be a component in between. When one component is deemed as being "connected to" another component, the component may be directly connected to the another component, or there may be a component in between.

Unless otherwise defined, all technical and scientific terms used in this application have same meanings as those usually understood by a person skilled in the art of this application. Terms used in this specification of this application are merely for the purpose of describing specific embodiments, but are not intended to limit this application. The term "and/or" used in this application includes any and all combinations of one or more related listed items.

The following describes in detail some embodiments of this application with reference to the accompanying drawings. In absence of conflicts, the following embodiments and features in the embodiments may be combined.

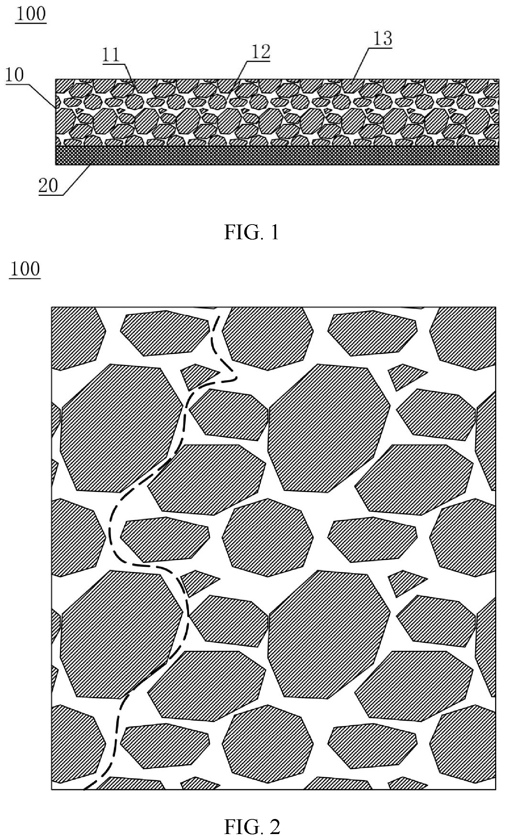

This application provides an electrode plate 100. With reference to FIG. 1, the electrode plate includes a current collector 20 and an active material layer 10 that are stacked. The active material layer 10 includes a plurality of active particles 13. The active material layer 10 further has a first pore 11 and a second pore 12. A pore diameter R1 of the first pore 11 and a pore diameter R2 of a second pore 12 satisfy 0.05*D50≤R1<0.65*D50 and 0.65*D50≤R1≤10*D50, where D50 is a median particle size of the plurality of active particles 13, and units of R1 and R2 are nm.

Specifically, the electrode plate 100 may be a positive electrode plate or a negative electrode plate. An electrode active material in the positive electrode plate is a positive active particle, and an electrode active material in the negative electrode plate is a negative active particle.

Optionally, the current collector 20 may be a foam metal mesh, a metal film material, or the like; and specifically includes any one of copper foil and aluminum foil.

Optionally, when the electrode plate 100 is a positive electrode plate, types of positive active particles include a lithium-intercalated active particle, a sodium-intercalated active particle, a potassium-intercalated active particle, a magnesium-intercalated active particle, a zinc-intercalated active particle, and an aluminum-intercalated active particle. A lithium secondary battery is used as an example. The positive active particle is selected from at least one of a group including LiCoO₂, LiNiO₂, LiCoₓNi₁₋ₓO₂ (0≤x≤1), LiCoₓNi_{1-x-y}Al_{y}O₂ (0≤x≤1, 0≤y≤1), LiMn₂O₄, LiFeₓMn_{y}M_{z}O₄ (M is at least one of Al, Mg, Ga, Cr, Co, Ni, Cu, Zn, or Mo, 0≤x≤1, 0≤y≤1, 0≤z≤1, x+y+z=1), Li₁₊ₓL_{1-y-z}M_{y}N_{z}O₂ (L, M, and N each are at least one of Li, Co, Mn, Ni, Fe, Al, Mg, Ga, Ti, Cr, Cu, Zn, Mo, F, I, S, and B, -0.1≤x≤0.2, 0≤y≤1, 0≤z≤1, 0≤y+z≤1), LiFePO₄, Li₃V₂(PO₄)₃, Li₃V₃(PO₄)₃, LiVPO₄F, Li₂CuO₂, Li₅FeO₄, and metal sulfides and oxides such as TiS₂, V₂S₃, FeS, FeS₂, LiMSₓ (M is at least one of transition metal elements such as Ti, Fe, Ni, Cu, and Mo, 1≤x≤2.5), TiO₂, Cr₃O₈, V₂O₅, and MnO₂.

Optionally, when the electrode plate 100 is a negative electrode plate, a negative electrode may include one or more of a carbon-based negative electrode, a silicon-based negative electrode, a tin-based negative electrode, a lithium negative electrode, a sodium negative electrode, a potassium negative electrode, a magnesium negative electrode, a zinc negative electrode, and an aluminum negative electrode. The carbon-based negative electrode may include graphite, hard carbon, soft carbon, and the like. The silicon-based negative electrode may include silicon, silicon carbon, silicon oxygen, silicon metal compound, and the like. The tin-based negative electrode may include tin, tin carbon, tin oxygen, and tin metal compound. The lithium negative electrode may include metal lithium or lithium alloy. The lithium alloy may be specifically at least one of a lithium silicon alloy, a lithium sodium alloy, a lithium potassium alloy, a lithium aluminum alloy, a lithium tin alloy, and a lithium indium alloy.

Optionally, when the electrode plate 100 is a negative electrode plate, the negative active particle includes one or more of: natural graphite, artificial graphite, hard carbon, soft carbon, lithium titanate, iron oxide, lithium titanium phosphate, titanium dioxide, silicon, silicon suboxide, aluminum, tin, and antimony.

Optionally, the active material layer 10 further includes an adhesive. The adhesive includes one or more of: tetrafluoroethylene and its copolymer, polyvinylidene difluoride and its copolymer, polyolefin and its copolymer, polyether and its copolymer, polyphenylene ether and its copolymer, polysiloxane and its copolymer, polyester and its copolymer, polyethylene oxide, polyethylene-polyethylene glycol block copolymer, polydimethylsiloxane, poly(dimethylsiloxane-co-alkylmethylsiloxane), nitrile butadiene rubber, polyvinyl ester, polyvinyl acetate, and polyacrylate.

Optionally, polyolefin includes one or more of: polyethylene, polypropylene, ethylene/propene copolymer, ethylene/vinylidene difluoride copolymer, and propene/vinylidene difluoride copolymer; and polytetrafluoroethylene and its copolymer may be one or more of: tetrafluoroethylene/ethylene copolymer, tetrafluoroethylene/propylene copolymer, tetrafluoroethylene/vinylidene difluoride copolymer, tetrafluoroethylene/ether copolymer, tetrafluoroethylene/siloxane copolymer, tetrafluoroethylene/branched polyether copolymer, tetrafluoroethylene/vinyl ether copolymer, and tetrafluoroethylene/branched polyether/vinyl ether copolymer.

Optionally, the active material layer 10 further includes a conductive agent. The conductive agent may be one or more of: conductive carbon black, acetylene black, Ketjen black, conductive graphite, carbon nanotube, carbon fiber, graphene, and the like.

Optionally, the active material layer 10 may be a self-supporting membrane. The self-supporting membrane may be prepared by using a dry electrode process. A used binder is high polymer, and the high polymer has a low apparent density. The high polymer with the low apparent density is more likely to form a fluffy state, so that a self-supporting membrane with an appropriate thickness can be obtained after one time of hot pressing. The adhesive may be processed into a fibrous form by using shear force. The fibrous adhesive is mixed with the active particles 13 and then prepared into a self-supporting membrane through hot pressing.

Further, the active material layer 10 also has pores, including the first pore 11 and the second pore 12 respectively. The first pore 11 and the second pore 12 have different pore diameters, and the pore diameter of the second pore 12 is greater than the pore diameter of the first pore 11. It should be explained that, as shown in FIG. 1, on a longitudinal cross section of the active material layer 10, the first pore 11 and the second pore 12 may have irregular contours, and the pore diameters of the first pore 11 and the second pore 12 each are a distance between two relative closest points on the contour. Certainly, the pore diameters of the first pore 11 and the second pore 12 each may alternatively be a distance between two relative farthest points on the contour. It may be understood that, when the pore diameter of the first pore 11 is the distance between the two relative closest points on the contour, the second pore 12 is also measured in the same manner. A SEM image with a magnification of 5000 is obtained from the longitudinal cross section of the active material layer 10 by using a scanning electron microscope. A region with dimensions of 0.5 cm * 0.5 cm is selected from the SEM image. A distance of an irregular contour in the region is measured. The pore diameter of the first pore 11 and the pore diameter of the second pore 12 may also be obtained by testing a pore diameter distribution curve of the electrode plate.

The pore diameter R1 of the first pore 11 satisfies 0.05*D50≤R1<0.65*D50, and the pore diameter R2 of the second pore 12 satisfies 0.65*D50≤R1≤10*D50. Herein, D50 is the median particle size of the plurality of active particles 13, that is, an average particle size of the plurality of active particles 13. Therefore, in different electrode plates 100, the pore diameters of the first pore 11 and the second pore 12 depend on particle sizes of used active particles 13.

D50 may be obtained by testing particle-size cross sections of the plurality of active particles 13 on the longitudinal cross section of the active material layer 10 by using the scanning electron microscope, and then measuring particle size distribution by using ImageJ software. Specifically, a SEM image with a magnification of 5000 is obtained from the longitudinal cross section of the active material layer 10 by using the scanning electron microscope. A region with dimensions of 0.5 cm * 0.5 cm is selected from the SEM image. Particle sizes of the plurality of active particles 13 in the region are measured. D50 is obtained by measuring particle size distribution by using ImageJ software. On the longitudinal cross section of the active material layer 10, the active particles 13 have different contours. A particle size of each single active particle 13 is obtained based on two closest points on a contour of the particle.

Optionally, the pore diameter R1 of the first pore 11 may be, but is not limited to, 0.05*D50, 015*D50, 0.2*D50, 0.25*D50, 0.3*D50, 0.35*D50, 0.4*D50, 0.45*D50, 0.5*D50, 0.55*D50, or 0.64*D50. The pore diameter R2 of the second pore 12 may be, but is not limited to, 0.65*D50, 1*D50, 2*D50, 3*D50, 4*D50, 5*D50, 6*D50, 7*D50, 8*D50, 9*D50, or 10*D50. Units of R1 and R2 are nm.

It may be understood that the first pore 11 and the second pore 12 are channels for electrolyte intrusion and ion flow in the active material layer 10. As shown in FIG. 2, on a cross section of the electrode plate 100, the first pore 11 and the second pore 12 may be bent and extended in any direction (shown by a dashed line in FIG. 2). When the pore diameters of the first pore 11 and the second pore 12 are different, a flux of an electrolyte flowing through the first pore 11 is different from that of the electrolyte flowing through the second pore 12. Specifically, the flux of the electrolyte in the second pore 12 should be greater than that of the electrolyte in the first pore 11.

Optionally, in a unit volume of the active material layer 10, the first pore 11 and the second pore 12 are uniformly distributed. To be specific, it can be understood that in the unit volume of the active material layer 10, a ratio of a proportion (porosity) of the first pore 11 to a proportion (porosity) of the second pore 12 satisfies a specific range. For example, in the unit volume of the active material layer 10, the porosity of the first pore 11 is A1, the porosity of the second pore 12 is A2, A2/A1=η, and η is a constant value.

Therefore, in the active material layer 10, when the pore diameter of the first pore 11 is smaller than the pore diameter of the second pore 12, the second pore 12 is a large high-speed channel with high-flux ion transfer in the active material layer 10, while the first pore 11 is similar to a capillary channel densely distributed in the active material layer 10, to ensure that ions penetrate between the active particles 13.

In this application, the active material layer 10 in the electrode plate 100 has the first pore 11 and the second pore 12, and the pore diameters of the first pore 11 and the second pore 12 satisfy a specific range. The larger second pore 12 becomes a large high-speed channel with high-flux ion transfer, and the smaller first pore 11 becomes a dense capillary channel. Through a pore distribution structure of large and small pores, the wettability of the electrolyte in the active material is improved, to optimize a transfer path of ions inside the electrode plate 100, thereby reducing overall internal resistance of a battery. This further improves power performance, fast-charging performance and low-temperature performance of the electrode plate 100 while improving ion mobility.

In an implementation, a total porosity in the active material layer 10 is σ, the total porosity σ includes the porosity A1 of the first pore 11 and the porosity A2 of the second pore 12, and the total porosity σ satisfies 25%≤σ≤35% and A1+A2≤σ.

Specifically, a total pore in the active material layer 10 is space required for satisfying immersion in an electrolyte and ion transfer in the active material layer 10 after the electrode plate 100 is produced. A value of the total porosity σ in the active material layer 10 is related to particle size distribution of the active particles 13. Wider particle size distribution of the active particles 13 indicates a higher tap density and a higher compaction density of the active material layer 10, resulting in a smaller total porosity σ in the active material layer 10. Narrower particle size distribution of the active particles 13 indicates a lower tap density and a lower compaction density of the active material layer 10, resulting in a larger total porosity σ in the active material layer 10.

Optionally, the active material layer 10 may further include a third pore, and a pore diameter of the third pore may be less than that of the first pore 11. Therefore, it may be understood that the total porosity σ in the active material layer 10 is a sum of the porosity A1 of the first pore 11 and the porosity A2 of the second pore 12 (and when there is the third pore, the porosity A3 of the third pore is also included).

Optionally, σ may be, but is not limited to, 25%, 26%, 27%, 28%, 29%, 30%, 31%, 32%, 33%, 34%, or 35%.

By setting the total porosity σ in the active material layer 10 within the foregoing range, contact between the active particles 13 and the electrolyte can be improved, thereby improving utilization of the active material. In addition, an appropriate porosity structure can provide a battery with appropriate mechanical strength and thermal stability, thereby improving a service life and safety of the battery.

In an implementation, the porosity A1 of the first pore 11 satisfies 15%≤A1≤34.5%, and the porosity A2 of the second pore 12 satisfies 0.3%≤A2≤10%.

Specifically, based on the total porosity σ provided in the foregoing implementation, the porosity A1 of the first pore 11 and the porosity A2 of the second pore 12 are further controlled, so that the porosity A1 of the first pore 11 is greater than the porosity A2 of the second pore 12. Advantages of the foregoing setting is that the first pore 11 has a larger proportion, to ensure that ions penetrate into capillary channels between the active particles 13 to implement ion exchange with the active particles 13.

Optionally, the porosity A1 of the first pore 11 may be, but is not limited to, 15%, 16%, 17%, 18%, 19%, 20%, 21%, 22%, 23%, 24%, 25%, 26%, 27%, 28%, 29%, 30%, 31%, 32%, 33%, 34%, or 34.5%.

Optionally, the porosity A2 of the second pore 12 may be, but is not limited to, 0.3%, 0.5%, 1%, 2%, 3%, 4%, 5%, 6%, 7%, 8%, 9%, or 10%.

In an implementation, a ratio η of the porosity A2 of the second pore 12 to the porosity A1 of the first pore 11 is A2/A1 and satisfies 1%*(σ/A)≤η≤15%*(σ/A), where A is a correction coefficient of the total porosity σ in the active material layer 10, and A satisfies 25%≤A≤35%.

Specifically, in the foregoing relational expression, A is the correction coefficient of the total porosity σ in the active material layer 10, that is, a coefficient used to correct the total porosity σ based on the electrode plate 100 provided in this application, so that the proportion distribution of the porosity A1 of the first pore and the porosity A2 of the second pore is more reliable.

It may be understood that in actual production, a total porosity σ of each electrode plate 100 is not a constant value. Due to errors in a preparation process, the total porosities σ of the electrode plates 100 should be within a specific range and can present normal distribution. A given in the present invention is a median of the total porosities σ of the electrode plates 100. For example, a total porosity σ of an electrode plate 100 that needs to be produced is 30%, but an actual total porosity σ of each electrode plate 100 should be close to 30%. Therefore, the correction coefficient A of 30% can be added, and (σ/A) is a final correction coefficient close to 1, so that A2/A1 in each electrode plate 100 is highly reliable.

Optionally, the correction coefficient A of the total porosity σ may be, but is not limited to, 25%, 26%, 27%, 28%, 29%, 30%, 31%, 32%, 33%, 34%, or 35%.

Because the active material layer 10 includes the plurality of active particles 13, performance of the electrode plate 100 can be optimized by controlling the particle size distribution of the active particles 13 and the pore diameters of the first pore 11 and the second pore 12. For example, by controlling ranges of the pore diameters R1 and R2, performance parameters such as the porosity, air permeability, and an ion transmission rate of the active material layer 10, and a capacity and internal resistance of the electrode can be adjusted. In addition, by using the foregoing relational expression, the pore diameter ranges of the two types of pores in the active material layer 10 can be further customized, and the pore diameters can be adjusted according to a requirement of specific application, to optimize performance of the battery.

In an implementation, the ratio η of the porosity A2 of the second pore 12 to the porosity A1 of the first pore 11 is A2/A1 and satisfies 1%*(σ/30%)≤η≤15%*(σ/30%).

Specifically, the total porosity σ in the obtained active material layer 10 is around 30%. Therefore, when 30% is set to the correction coefficient A of the total porosity σ in the active material layer 10, the total porosity σ in the active material layer 10 is an actually measured total porosity of the produced electrode plate 100, a ratio of the total porosity to the correction coefficient (σ/30%) may be understood as a correction to the ratio η of the second pore 12 and the first pore 11.

In an implementation, the ratio η of the porosity A2 of the second pore 12 to the porosity A1 of the first pore 11 is A2/A1 and satisfies 1%≤η≤15%.

Optionally, when σ is equal to 30%, and A is equal to 30%, a ratio η of the second pore 12 to the first pore 11 may be, but is not limited to, 1%, 2%, 3%, 4%, 5%, 6%, 7%, 8%, 9%, 10%, 11%, 12%, 13%, 14%, or 15%.

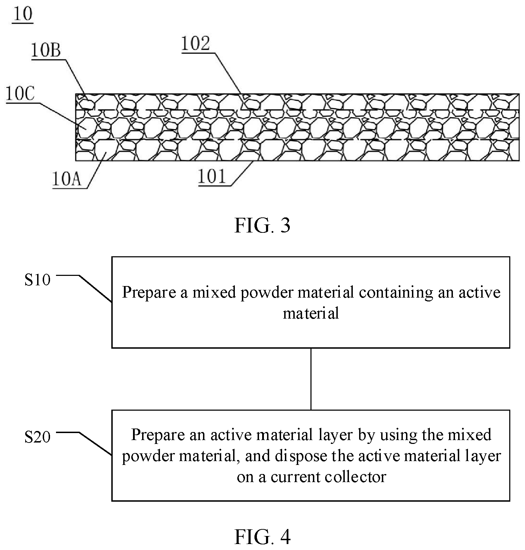

In an implementation, with reference to FIG. 3, the active material layer 10 includes a first surface 101 and a second surface 102 opposite to each other, the first surface 101 is connected to the current collector 20, and a proportion of the second pore 12 in a direction from the first surface 101 to the second surface 102 presents a trend of decreasing before increasing.

Specifically, the electrode plate 100 provided in this application has a differentiated pore distribution structure in which the second pore 12 has a higher proportion as being closer to a surface of the active material layer 10.

As shown in FIG. 3, the active material layer 10 includes the first surface 101 and the second surface 102 opposite to each other. The active material layer 10 can be divided into a first surface layer 10A, a second surface layer 10B, and an intermediate layer 10C (as shown by using dashed lines in FIG. 3). The intermediate layer 10C is located between the first surface layer 10A and the second surface layer 10B. The first surface layer 10A includes the first surface 101, and the second surface layer 10B includes the second surface 102. In the first surface layer 10A (or the second surface layer 10B), the proportion of the second pore 12 may be greater than the proportion of the first pore 11. In the intermediate layer 10C, the proportion of the second pore 12 may be less than the proportion of the first pore 11. Further, the proportion of the second pore 12 in the active material layer 10 can vary regularly. To be specific, along a thickness direction of the active material layer 10, the proportion of the second pore 12 presents a trend of decreasing before increasing. It should be explained that the proportion of the second pore 12 is a ratio of the second pore 12 to a total pore in the unit volume of the active material layer 10, that is, a ratio of the porosity A2 of the second pore 12 to the total porosity σ.

By setting the proportion of the second pore 12 in the active material layer 10 to present the trend of decreasing before increasing, a proportion of the second pore 12 at the surface layer is relatively large, making it easier for the electrolyte to immerse the active material layer 10 from the surface layer, thereby improving the wettability of the electrolyte. In addition, a proportion of the first pore 11 in the intermediate layer 10C is relatively large, to improve contact between the electrolyte and each active particle 13, thereby further improving the wettability of the electrolyte for the entire active material layer 10.

In an implementation, the median particle size D50 of the active particles 13 satisfies 100 nm≤D50≤30 µm. Specifically, when the median particle size D50 of the active particles 13 satisfies the foregoing relational expression, particle sizes in the active material layer 10 can be better controlled, to prevent the particle size from being too small or too small, thereby ensuring that the active material can have the first pore 11 and the second pore 12.

Optionally, the median particle size D50 of the active particles 13 may be, but is not limited to, 100 nm, 200 nm, 300 nm, 500 nm, 800 nm, 1 µm, 2 µm, 3 µm, 5 µm, 8 µm, 10 µm, 20 µm, or 30 µm. The median particle size D50 of the active particles 13 may be obtained by testing particle-size cross sections of the plurality of active particles 13 on the longitudinal cross section of the active material layer 10 by using the scanning electron microscope, and then measuring particle size distribution by using ImageJ software. Specifically, a SEM image with a magnification of 5000 is obtained from the longitudinal cross section of the active material layer 10 by using the scanning electron microscope. A region with dimensions of 0.5 cm * 0.5 cm is selected from the SEM image. Particle sizes of the plurality of active particles 13 in the region are measured. D50 is obtained by measuring particle size distribution by using ImageJ software. On the longitudinal cross section of the active material layer 10, the active particles 13 have different contours. A particle size of each single active particle 13 is obtained based on two closest points on a contour of the particle.

By controlling lower and upper limits of the particle sizes of the active particles 13 and using the relational expression in the foregoing implementation, the porosity and a distribution ratio of the first pore 11 in the active material layer 10 can be reasonably set, to obtain a high-capacity electrode plate 100 while ensuring requirements of immersion in the electrolyte and ion transfer in the active material layer 10.

In an implementation, this application further provides a preparation method of an electrode plate. As shown in FIG. 4, the following steps are included.

Step S10: Prepare a mixed powder material containing an active material.

Step S20: Prepare an active material layer by using the mixed powder material, and dispose the active material layer on a current collector.

The active material layer includes a plurality of active particles. The active material layer further has a first pore and a second pore. A pore diameter R1 of the first pore and a pore diameter R2 of a second pore satisfy 0.05*D50≤R1<0.65*D50 and 0.65*D50≤R1≤10*D50, where D50 is median particle size of the plurality of active particles.

Specifically, in step S10, preparing the mixed powder material containing the active material includes: premixing the active material, a binder, and a conductive agent in proportion to obtain premixed powder; and putting the premixed powder into a jet mill for grinding and mixing to obtain jet mill mixed powder.

Optionally, the active material (particles), the binder, and the conductive agent are weighed in corresponding proportions and put into a V-type mixer for premixing. A mass percentage of the binder ranges from 1.5% to 5%. A mass percentage of the conductive agent ranges from 0.3% to 2%. Then, a crushing air pressure range for grinding and mixing after putting the premixed powder into the jet mill ranges from 0.1 MPa to 0.8 MPa.

Optionally, in step S20, preparing the active material layer by using the mixed powder material, and disposing the active material layer on the current collector may include: rolling the jet mill mixed powder to form a first self-supporting membrane; rolling the first self-supporting membrane to form a second self-supporting membrane; and attaching the second self-supporting membrane to the current collector to obtain the electrode plate.

Optionally, the obtained jet mill mixed powder is rolled into the self-supporting membrane (that is, the first self-supporting membrane) by using a hot roller press. A rolling linear pressure range is 0.1 t/cm to 1 t/cm, a differential speed ratio satisfies 1:1 to 1:3, and a temperature range is 100°C to 250°C. Then, the self-supporting membrane is rolled in two stages by using a roller press to obtain a thinned membrane (that is, the second self-supporting membrane). A rolling linear pressure range is 0.1 t/cm to 1 t/cm, a differential speed ratio satisfies 1:1 to 1:3, and a temperature range is 60°C to 180°C. Finally, the two membranes are hot-pressed together with a foil material coated with a back adhesive to form an electrode plate with a required porosity. The self-supporting membrane presents regular pore distribution by controlling the rolling linear pressure range to be 0.1 t/cm to 1 t/cm and the differential speed ratio to satisfy 1:1 to 1:3. The differential speed ratio means a rotation rate ratio between an upper roller (lower roller) and a lower roller (upper roller) of a roller press.

Optionally, the proportion of the second pore in the active material layer (that is, the self-supporting membrane) can vary regularly. To be specific, along the thickness direction of the active material layer, the proportion of the second pore presents the trend of decreasing before increasing. It should be explained that the proportion of the second pore is the ratio of the second pore to the total pore in the unit volume of the active material layer.

Optionally, the active material (particles), the binder, and the conductive agent in this implementation can all be the same as those provided in the foregoing implementation. Details are not described herein again.

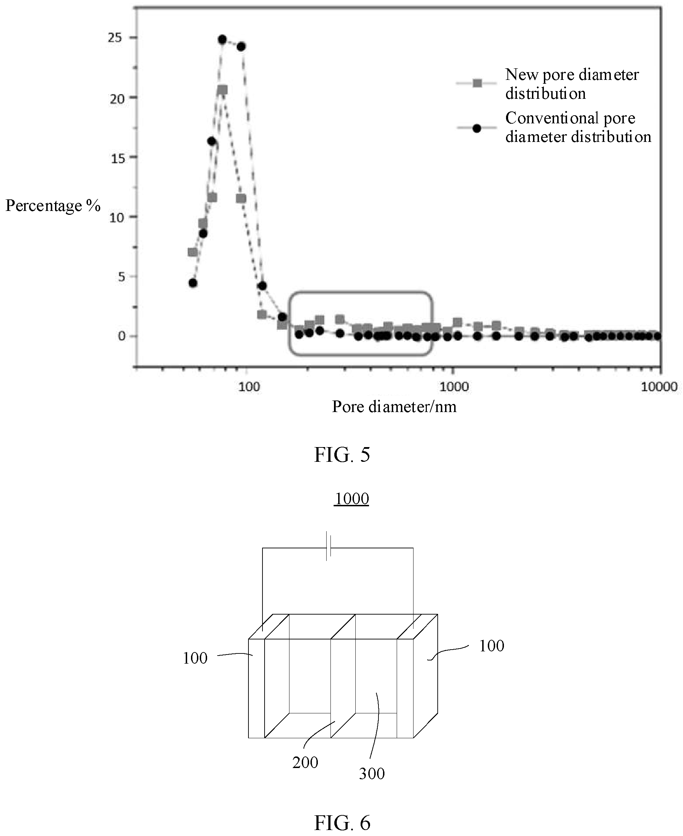

In an implementation, as shown in FIG. 6, this application further provides a battery 1000, including a separator 200 and the electrode plate 100 in the foregoing implementations. The electrode plate 100 includes a positive electrode plate and a negative electrode plate. The positive electrode plate and the negative electrode plate are disposed on two opposite sides of the separator 200. This application does not limit a specific type of the battery, and both the positive electrode plate and the negative electrode plate of the battery can be prepared by using the foregoing method. In an implementation, the battery 1000 further includes an electrolyte 300.

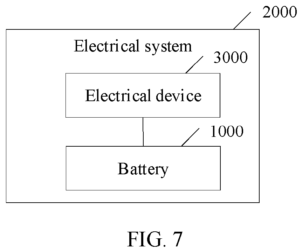

In an implementation, as shown in FIG. 7, this application further provides an electrical system 2000. The electrical system 2000 includes an electrical device 3000 and a battery 1000. The battery 1000 is configured to supply power to the electrical device 3000. The electrical system 2000 may be a new energy vehicle or an energy storage power station.

The following describes the technical solutions of the present invention in detail with reference to specific examples.

### Example 1

This example provides a positive electrode plate. Active particles are lithium iron phosphate. An active material layer has a first pore and a second pore. A particle size D50 of the active particle is 1 µm. A pore diameter of the first pore is about 90 nm. A porosity A1 of the first pore is 26.7%. A pore diameter of the second pore is about 1 µm. A porosity A2 of the second pore is 4%. A correction coefficient A is 30%. A preparation method of the positive electrode plate is as follows:
(1) Lithium iron phosphate, a conductive agent, and a binder were added in a ratio of 100:1:3 to a V-type mixer and mixed, and then put into a jet mill and ground at a pressure of 0.6 MPa to obtain homogenized dry powder.
(2) The homogenized dry powder was evenly transferred to a horizontal hot roller press at a pressure of 1 t/cm, a roll gap of 100 µm, a differential speed ratio of 1:1, and a temperature of 150°C.
(3) A preliminarily film-formed electrode plate was rolled at the pressure of 1 t/cm, the differential speed ratio of 1:1, and the temperature of 150°C to a surface density of 220 g/m² (the roll gap was adjusted based on the surface density).
(4) The rolled electrode plate was thermally bonded with an aluminum foil coated with a back adhesive layer at 150°C to obtain a target electrode plate, and then compacted to 2.5 g/cm³ through rolling.

### Example 2

This example provides a positive electrode plate. Active particles are lithium iron phosphate. An active material layer has a first pore and a second pore. A particle size D50 of the active particle is 1 µm. A pore diameter of the first pore is about 200 nm. A porosity A1 of the first pore is 28%. A pore diameter of the second pore is about 700 nm. A porosity A2 of the second pore is 2%. A correction coefficient A is 30%. A preparation method of the positive electrode plate is as follows:
(1) Lithium iron phosphate, a conductive agent, and a binder were added in a ratio of 100:1:3 to a V-type mixer and mixed, and then put into a jet mill and ground at a pressure of 0.6 MPa to obtain homogenized dry powder.
(2) The homogenized dry powder was evenly transferred to a horizontal hot roller press at a pressure of 1 t/cm, a roll gap of 100 µm, a differential speed ratio of 1:1.5, and a temperature of 150°C.
(3) A preliminarily film-formed electrode plate was rolled at the pressure of 1 t/cm, the differential speed ratio of 1:1.5, and the temperature of 150°C to a surface density of 220 g/m² (the roll gap was adjusted based on the surface density).
(4) The rolled electrode plate was thermally bonded with an aluminum foil coated with a back adhesive layer at 150°C to obtain a target electrode plate, and then compacted to 2.5 g/cm³ through rolling.

### Example 3

This example provides a positive electrode plate. Active particles are lithium iron phosphate. An active material layer has a first pore and a second pore. A particle size D50 of the active particle is 1 µm. A pore diameter of the first pore is about 90 nm. A porosity A1 of the first pore is 23.5%. A pore diameter of the second pore is about 1 µm. A porosity A2 of the second pore is 2.5%. A correction coefficient A is 25%. A preparation method of the positive electrode plate is as follows:
(1) Lithium iron phosphate, a conductive agent, and a binder were added in a ratio of 100:1:3 to a V-type mixer and mixed, and then put into a jet mill and ground at a pressure of 0.6 MPa to obtain homogenized dry powder.
(2) The homogenized dry powder was evenly transferred to a horizontal hot roller press at a pressure of 1 t/cm, a roll gap of 100 µm, a differential speed ratio of 1:1, and a temperature of 150°C.
(3) A preliminarily film-formed electrode plate was rolled at the pressure of 1 t/cm, the differential speed ratio of 1:1, and the temperature of 150°C to a surface density of 220 g/m² (the roll gap was adjusted based on the surface density).
(4) The rolled electrode plate was thermally bonded with an aluminum foil coated with a back adhesive layer at 150°C to obtain a target electrode plate, and then compacted to 2.5 g/cm³ through rolling.

### Example 4

This example provides a positive electrode plate. Active particles are lithium iron phosphate. An active material layer has a first pore and a second pore. A particle size D50 of the active particle is 1 µm. A pore diameter of the first pore is about 600 nm. A porosity A1 of the first pore is 34%. A pore diameter of the second pore is about 9000 nm. A porosity A2 of the second pore is 0.4%. A correction coefficient A is 35%. A preparation method of the positive electrode plate is as follows:
(1) Lithium iron phosphate, a conductive agent, and a binder were added in a ratio of 100:1:3 to a V-type mixer and mixed, and then put into a jet mill and ground at a pressure of 0.6 MPa to obtain homogenized dry powder.
(2) The homogenized dry powder was evenly transferred to a horizontal hot roller press at a pressure of 1 t/cm, a roll gap of 100 µm, a differential speed ratio of 1:2, and a temperature of 150°C.
(3) A preliminarily film-formed electrode plate was rolled at the pressure of 1 t/cm, the differential speed ratio of 1:3, and the temperature of 150°C to a surface density of 220 g/m² (the roll gap was adjusted based on the surface density).
(4) The rolled electrode plate was thermally bonded with an aluminum foil coated with a back adhesive layer at 150°C to obtain a target electrode plate, and then compacted to 2.5 g/cm³ through rolling.

### Example 5

This example provides a positive electrode plate. Active particles are lithium iron phosphate. An active material layer has a first pore and a second pore. A particle size D50 of the active particle is 1 µm. A pore diameter of the first pore is about 500 nm. A porosity A1 of the first pore is 35%. A pore diameter of the second pore is about 8800 nm. A porosity A2 of the second pore is 0.4%. A correction coefficient A is 35%. A preparation method of the positive electrode plate is as follows:
(1) Lithium iron phosphate, a conductive agent, and a binder were added in a ratio of 100:1:3 to a V-type mixer and mixed, and then put into a jet mill and ground at a pressure of 0.6 MPa to obtain homogenized dry powder.
(2) The homogenized dry powder was evenly transferred to a horizontal hot roller press at a pressure of 1 t/cm, a roll gap of 100 µm, a differential speed ratio of 1:2.5, and a temperature of 150°C.
(3) A preliminarily film-formed electrode plate was rolled at the pressure of 1 t/cm, the differential speed ratio of 1:3, and the temperature of 150°C to a surface density of 220 g/m² (the roll gap was adjusted based on the surface density).
(4) The rolled electrode plate was thermally bonded with an aluminum foil coated with a back adhesive layer at 150°C to obtain a target electrode plate, and then compacted to 2.5 g/cm³ through rolling.

### Example 6

This example provides a positive electrode plate. Active particles are lithium iron phosphate. An active material layer has a first pore and a second pore. A particle size D50 of the active particle is 1 µm. A pore diameter of the first pore is about 550 nm. A porosity A1 of the first pore is 38%. A pore diameter of the second pore is about 8000 nm. A porosity A2 of the second pore is 0.2%. A correction coefficient A is 40%. A preparation method of the positive electrode plate is as follows:
(1) Lithium iron phosphate, a conductive agent, and a binder were added in a ratio of 100:1:3 to a V-type mixer and mixed, and then put into a jet mill and ground at a pressure of 0.6 MPa to obtain homogenized dry powder.
(2) The homogenized dry powder was evenly transferred to a horizontal hot roller press at a pressure of 1 t/cm, a roll gap of 100 µm, a differential speed ratio of 1:3, and a temperature of 150°C.
(3) A preliminarily film-formed electrode plate was rolled at the pressure of 1 t/cm, the differential speed ratio of 1:3, and the temperature of 150°C to a surface density of 220 g/m² (the roll gap was adjusted based on the surface density).
(4) The rolled electrode plate was thermally bonded with an aluminum foil coated with a back adhesive layer at 150°C to obtain a target electrode plate, and then compacted to 2.5 g/cm³ through rolling.

### Comparative example 1

A conventional wet coating process is used. Lithium iron phosphate, a conductive agent, and a binder were added in a ratio of 100:1:3 into a mixer to prepare a wet slurry. Then, an aluminum foil was coated with the wet slurry, where a surface density was controlled to be 220 g/m²; and then was compacted to 2.5 g/cm³ through rolling, to obtain a positive electrode plate. Active particles are lithium iron phosphate. An active material layer has a first pore and a second pore. A particle size D50 of the active particle is 1 µm. A pore diameter of the first pore is about 800 nm. A porosity A1 of the first pore is 28%. A pore diameter of the second pore is about 11 µm. A porosity A2 of the second pore is 0.015%. A correction coefficient A is 28%.

### Comparative example 2

This comparative example provides a positive electrode plate. In the obtained positive electrode plate, active particles are lithium iron phosphate. An active material layer has a first pore and a second pore. A particle size D50 of the active particle is 1 µm. A pore diameter of the first pore is about 40 nm. A porosity A1 of the first pore is 25%. A pore diameter of the second pore is about 1 µm. A porosity A2 of the second pore is 0.12%. A correction coefficient A is 25%.

A preparation method of the positive electrode plate is as follows:
(1) Lithium iron phosphate, a conductive agent, and a binder were added in a ratio of 100:1:3 to a V-type mixer and mixed, and then put into a jet mill and ground at a pressure of 0.6 MPa to obtain homogenized dry powder.
(2) The homogenized dry powder was evenly transferred to a horizontal hot roller press at a pressure of 1 t/cm, a roll gap of 100 µm, and a temperature of 150°C to be rolled at a uniform speed.
(3) A preliminarily film-formed electrode plate was rolled at the uniform speed, the pressure of 1 t/cm, and the temperature of 150°C to a surface density of 220 g/m² (the roll gap was adjusted based on the surface density).
(4) The rolled electrode plate was thermally bonded with an aluminum foil coated with a back adhesive layer at 150°C to obtain a target electrode plate, and then compacted to 2.5 g/cm³ through rolling.

The following calculations and tests are conducted on the electrode plates provided in Examples 1 to 6 and Comparative examples 1 and 2 above.

Ratio η = A2/A1 of the porosity A2 of the second pore to the porosity A1 of the first pore is calculated. A total porosity σ of lithium iron phosphate is 30% when a compaction density is 2.5 g/cm³.

Porosity test (by using mercury porosimetry): A test range is 0.1 psia to 61000 psia.

Pore diameter test method: A scanning electron microscope is used for testing, and then distribution of distances between two nearest points on a contour is measured by using ImageJ software. A pore diameter may also be obtained from a pore diameter distribution curve.

Active particle D50 may be obtained through testing by using a scanning electron microscope, and then measuring particle size distribution by using ImageJ software.

Electrode plate DCIR (direct current internal resistance) test: Consistency is ensured for a counter electrode. A lithium plate may be used as the counter electrode. After formation, discharging is performed for adjustment to 50% SoC, resting is implemented for 1 h, and then discharging is performed at 1.5C for 30s. A difference between an end voltage and a start voltage is taken as ΔV, and a test current at 1.5C is taken as I. In this case, DCIR=ΔV/I.

Rate capability test: A battery is prepared as above. After formation and grading, charging is performed at 0.33C to 100% SoC, and then discharging is performed at 1C and 3C to a cut-off voltage to obtain different rate capacities. A C-rate capacity percentage Q is obtained by dividing a 3C rate capacity by a 1C rate capacity.

Low-temperature performance test: A battery is prepared as above. After formation and grading, charging is performed at 0.33C to 100% SoC, and then discharging is performed at 0.33C to a cut-off voltage separately at 25°C and 0°C to obtain different low-temperature capacities. A low-temperature capacity percentage q is obtained by dividing a capacity at 0°C by a capacity at 25°C.

A performance comparison result in Table 1 is obtained after tests and calculations.

**Table 1**

| | Ratio η of the porosity A2 of the second pore to the porosity A1 of the first pore | Direct current internal resistance DCIR | C-rate capacity percentage Q | Low-temperature capacity percentage q |
|---|---|---|---|---|
| Example 1 | 14.98% | 20.5 Ω | 92% | 81% |
| Example 2 | 7.14% | 22.3 Ω | 89% | 79% |
| Example 3 | 10.6% | 20.1 Ω | 93% | 82% |
| Example 4 | 1.18% | 25.1 Ω | 88% | 77% |
| Example 5 | 1.14% | 25.9 Ω | 86% | 75% |
| Example 6 | 0.53% | 25.9 Ω | 85% | 73% |
| Comparative example 1 | 0.05% | 28.0 Ω | 82% | 63% |
| Comparative example 2 | 0.48% | 26.7 Ω | 83% | 66% |

FIG. 5 is a diagram of pore diameter distribution of Example 1 and Comparative example 1. New pore diameter distribution is Example 1, and conventional pore diameter distribution is Comparative example 1. It may be learned from FIG. 5 that a distribution rate of large pore diameters in Example 1 is higher than that in Comparative example 1. This also indicates that the electrode plate prepared in the preparation method provided in this application has pore distribution with different pore diameters.

It may be learned from the test result in Table 1 that ratios of the second pore and the first pore in Examples 1 to 6 are all greater than ratios in Comparative examples 1 and 2. It also indicates that a proportion of large pores in the examples is relatively large. Thus, under functions of large pores and small pores, direct current internal resistance DCIR of an electrode plate, a C-rate capacity percentage Q, and a low-temperature capacity percentage q are all higher than those in Comparative examples 1 and 2. It indicates that performance of the battery can be improved by using both the first pore and the second pore.

In descriptions of embodiments of this application, it should be noted that orientation or position relationships indicated by terms "center", "above", "below", "left", "right", "vertical", "horizontal", "inner", "outer", and the like are orientation or position relationships based on the accompanying drawings, and are only intended to facilitate and simplify the description of this application, but are not intended to indicate or imply that an apparatus or an element needs to have a specific orientation and be constructed and operated in a specific orientation, and therefore cannot be understood as a limitation on this application.

What is disclosed above is merely preferred embodiments of this application, and certainly is not intended to limit the protection scope of this application. A person of ordinary skill in the art may understand that all or some of processes for implementing the foregoing embodiments and equivalent modifications made in accordance with the claims of this application shall fall within the scope of this application.

## Claims

1. An electrode plate (100), comprising:
a current collector (20) and an active material layer (10) that are stacked;
the active material layer (10) comprising a plurality of active particles (13), and the active material layer (10) further having a first pore (11) and a second pore (12); and
a pore diameter R1 of the first pore (11) and a pore diameter R2 of the second pore (12) satisfying 0.05*D50≤R1<0.65*D50 and 0.65*D50≤R2≤10*D50, wherein D50 is a median particle size of the plurality of active particles (13), and units of R1 and R2 are nm.

2. The electrode plate (100) according to claim 1, a porosity A1 of the first pore (11) satisfying 15%≤A1≤34.5%, and a porosity A2 of the second pore (12) satisfying 0.3%≤A2≤10%.

3. The electrode plate (100) according to claim 1 or 2, a total porosity in the active material layer (10) being σ, the total porosity σ comprising the porosity A1 of the first pore (11) and the porosity A2 of the second pore (12), and the total porosity σ satisfying 25%≤σ≤35% and A1+A2≤σ.

4. The electrode plate (100) according to claim 3, a ratio η of the porosity A2 of the second pore (12) to the porosity A1 of the first pore (11) being A2/A1 and satisfying 1%*(σ/A)≤η≤15%*(σ/A), wherein A is a correction coefficient of the total porosity σ in the active material layer (10), and A satisfies 25%≤A≤35%.

5. The electrode plate (100) according to claim 3 or 4, the ratio η of the porosity A2 of the second pore (12) to the porosity A1 of the first pore (11) being A2/A1 and satisfying 1%*(σ/30%)≤η≤15%*(σ/30%).

6. The electrode plate (100) according to claim 2, a ratio η of the porosity A2 of the second pore (12) to the porosity A1 of the first pore (11) being A2/A1 and satisfying 1%≤η≤15%.

7. The electrode plate (100) according to any one of claims 1 to 6, the active material layer (10) comprising a first surface (101) and a second surface (102) opposite to each other, the first surface (101) being connected to the current collector (20), and a proportion of the second pore (12) in a direction from the first surface (101) to the second surface (102) presenting a trend of decreasing before increasing.

8. The electrode plate (100) according to any one of claims 1 to 7, the median particle size D50 of the active particles (13) satisfying 100 nm≤D50≤30 µm.

9. A preparation method of an electrode plate, comprising:
preparing a mixed powder material containing an active material (S10);
preparing an active material layer by using the mixed powder material, and disposing the active material layer on a current collector (S20);
the active material layer comprising a plurality of active particles, and the active material layer further having a first pore and a second pore; and
a pore diameter R1 of the first pore and a pore diameter R2 of the second pore satisfying 0.05*D50≤R1<0.65*D50 and 0.65*D50≤R1≤10*D50, wherein D50 is a median particle size of the of active particles.

10. The preparation method according to claim 9, preparing the mixed powder material containing the active material comprises:
premixing the active material, a binder, and a conductive agent in proportion to obtain premixed powder; and
putting the premixed powder into a jet mill for grinding and mixing to obtain jet mill mixed powder.

11. The preparation method according to claim 10, a mass percentage of the binder ranging from 1.5% to 5%, a mass percentage of the conductive agent ranging from 0.3% to 2%, and a crushing air pressure range for grinding and mixing after putting the premixed powder into the jet mill ranging from 0.1 MPa to 0.8 MPa.

12. The preparation method according to claim 10 or 11, preparing the active material layer by using the mixed powder material, and disposing the active material layer on the current collector comprises:
rolling the jet mill mixed powder to form a first self-supporting membrane;
rolling the first self-supporting membrane to form a second self-supporting membrane; and
attaching the second self-supporting membrane to the current collector to obtain the electrode plate.

13. The preparation method according to claim 12, a rolling linear pressure range for forming the first self-supporting membrane being 0.1 t/cm to 1 t/cm, a differential speed ratio satisfying 1:1 to 1:3, and a temperature range being 100°C to 250°C; a rolling linear pressure range for forming the second self-supporting membrane being 0.1 t/cm to 1 t/cm, a differential speed ratio satisfying 1:1 to 1:3, and a temperature range being 60°C to 180°C; and a rolling linear pressure range for attaching the second self-supporting membrane to the current collector to obtain the electrode plate being 0.1 t/cm to 1 t/cm, and a differential speed ratio satisfying 1:1 to 1:3.

14. A battery (1000), comprising a separator (200) and the electrode plate (100) according to any one of claims 1 to 8, the electrode plate (100) comprising a positive electrode plate and/or a negative electrode plate; or the battery (1000) comprising a separator (200) and the electrode plate (100) prepared by using the preparation method of the electrode plate according to any one of claims 9 to 13, and the electrode plate (100) comprising a positive electrode plate and/or a negative electrode plate.

15. An electrical system (2000), the electrical system (2000) comprising an electrical device (3000) and the battery (1000) according to claim 14, the battery (1000) being configured to supply power to the electrical device (3000).
